Europäisches Patentamt

(19) European Patent Office

Office européen des brevets

(11) Publication number: **0 233 317**
**A1**

## (12) EUROPEAN PATENT APPLICATION

(21) Application number: 86113841.0

(22) Date of filing: 06.10.86

(51) Int. Cl.³: **C 07 C 85/06**
**C 07 C 87/127, B 01 J 23/86**

(30) Priority: 03.02.86 US 825124

(43) Date of publication of application:
26.08.87 Bulletin 87/35

(84) Designated Contracting States:
BE DE ES FR GB IT NL

(71) Applicant: **PENNWALT CORPORATION**
**Pennwalt Building Three Parkway**
**Philadelphia Pennsylvania 19102(US)**

(72) Inventor: **Clark, Roger T.**
**531 Neiman Road**
**Pottstown, PA 19464(US)**

(74) Representative: **Kraus, Walter, Dr. et al,**
**Patentanwälte Kraus, Weisert & Partner**
**Thomas-Wimmer-Ring 15**
**D-8000 München 22(DE)**

(54) Process for preparing mixed alkyl amines.

(57) Mixed alkyl amines are prepared by the reaction of a gaseous primary or secondary $C_{1-5}$ alkanol with a primary or secondary mono or di $C_{1-5}$ alkyl amine, said amine having a different number of carbon atoms in the alkyl radical than said alkanol, in the presence of hydrogen and a specified hydrogenation/dehydrogenation catalyst at an elevated temperature and an elevated pressure of from 225 to 550 psig.

EP 0 233 317 A1

Croydon Printing Company Ltd.

## PROCESS FOR PREPARING MIXED ALKYL AMINES

### IR 2719

### BACKGROUND OF THE INVENTION

This invention concerns a process for the preparation of mixed alkyl amines. More particularly, it concerns the reaction of a $C_{1-5}$ alkanol with a $C_1$-$C_5$ alkyl amine, having an alkyl chain of different length than said alkanol, in accordance with one of the following equations:

1)  $ROH + R'NH_2 \xrightarrow[\text{Cat.}]{(H_2)} RR'NH + H_2O + 1/2\ H_2$

2)  $ROH + (R')_2NH \xrightarrow[\text{Cat.}]{(H_2)} (R')_2NR + H_2O$

1

The reaction is carried out at an elevated pressure within a critical range, an elevated temperature, in the presence of a selected hydrogenation/dehydrogenation catalyst and at specified molar ratios of reactants. The mixed dialkyl amine products have a variety of uses including catalysts in the preparation of polyurethanes and epoxy resins, corrosion inhibitors and additives in textile treating compositions.

## PRIOR ART

The formation of a mixed alkyl amine (dimethylethyl amine) in the presence of hydrogen and a hydrogenation/dehydrogenation catalyst at elevated temperature and slightly elevated pressure is known from U.S. Patent No. 4,310,697. The process disclosed in this patent is carried out in the vapor phase and may employ a catalyst comprising copper and chromic acid with or without another metal oxide. Reactant molar ratios of dimethyl amine to alcohol of between 0.2 and 0.6 must be used to avoid the coproduction of very large quantities of aminated secondary products. However, the use of reactants within this critical molar ratio results in the formation of acetaldehyde which must be hydrogenated back to ethyl alcohol by a post catalytic hydrogenation step to recover its value and to simplify the purification of the mixed amine product. The formation of small amounts of by-product trimethylamine in this patented process also presents a serious problem because of its intensely offensive odor requiring stringent air pollution controls.

2

## STATEMENT OF THE INVENTION

This invention is a process for the preparation of mixed alkyl amines comprising reacting a primary or secondary $C_{1-5}$ alkanol with a primary or secondary mono- or di-$C_{1-5}$ alkyl amine, said amine having a different number of carbon atoms in the alkyl radical than said alkanol, at a molar ratio of amine to alkanol ranging from 0.2 to about 5, a temperature in the range of 170 to about 240 °C, a pressure of from 225 psig (16.5 bars) to about 550 psig (38.9 bars) in the presence of hydrogen and a hydrogenation/dehydrogenation catalyst comprising copper and chromium oxides alone or admixed with barium oxide, and for a time sufficient to form the corresponding mixed amine. The catalyst may be mounted on a solid, inert support, for example, kieselguhr, aluminum oxide, silica-alumina or silica.

## DETAILED DESCRIPTION OF THE INVENTION

The process of this invention, utilizing a critical range of reaction pressure in the reaction of an alkanol and an alkyl amine, eliminates the formation of aldehydes and very large quantities of aminated secondary products reported to be formed at a ratio of amino/alcohol in excess of 0.6.

The primary and secondary $C_{1-5}$ alkanols which are useful for this invention include, for example, methanol, ethanol, propanol, butanol, pentanol, isopropyl alcohol, isobutyl alcohol

3

and isoamyl alcohol. Ethanol, based on its more frequent use as a reactant to prepare mixed alkyl amines, is preferred.

The primary and secondary mono- and di-$C_{1-5}$ alkyl amines which are used in this process include, for example, methyl amine, ethyl amine, propyl amine, butyl amine, pentyl amine, isopropyl amine, isobutyl amine, isoamyl amine, dimethyl amine, diethyl amine, dipropyl amine, dibutyl amine, diisopropyl amine, diisobutyl amine and diisoamyl amine. The preferred amines, based on their more frequent use for the preparation of mixed amines, are methyl amine, ethyl amine and dimethyl amine.

The ratio of amine to alkanol employed in this process ranges from 0.2 to about 5, preferably from about 0.5 to about 1.5 and most preferably about stoichiometric. The temperature employed ranges from about 170 to about 240 °C, preferably from about 180 to about 225 °C. The temperature range is required to maintain the reactants in the gaseous state and to provide maximum conversion and selectivity under the reaction conditions. The pressure of the reaction ranges from about 225 psig (16.5 bars) to about 550 psig (38.9 bars), preferably from about 230 psig (16.9 bars) to about 300 psig (21.7 bars). The prescribed pressure range is critical to avoid the formation of aldehydes and large quantities of amine byproducts.

The amount of hydrogen used during the reaction will depend on the amount of alkanol employed. For a continuous vapor phase operation, in order to maintain catalyst activity, a minimum of

4

about 20 mole % hydrogen is required in the total reaction feed stream. Preferably, from 1 to about 1.5 moles of hydrogen per mole of alcohol is used. At low alkanol addition, high amounts of hydrogen are preferred.

The reaction is carried out for a time sufficient to form the mixed amine corresponding to the reactants. Depending on the reaction conditions and reactor equipment, the time will range from a few seconds in a continuous reaction to 30 minutes or more in a batch type reactor.

The catalyst for this reaction is a mixture of copper and chromium oxides, preferably from about 20 to 80 weight percent copper oxide to about 80 to 20 weight percent of chromium oxide. More preferably, the active catalyst mixture will include a minor amount of barium oxide in the mixture to inhibit complete reduction of the copper oxide, thus maintaining selectivity and extending catalyst life. From about 5 to about 25 weight percent of barium oxide is preferably incorporated based on the total weight of the active catalyst system. In addition, the active catalyst may be supported on an inert solid carrier material, for example, kieselguhr, alumina, silica-alumina or silica such that the active material consists of about 20 to about 95 weight percent of the catalyst-carrier combination. The catalyst is generally employed in particulate form, for example, as a powder, pellet or tablet.

## EXAMPLES

The reactor employed in the following examples is a gradientless-catalytic reactor manufactured by Autoclave Engineers. It is a 316 ss, electrically heated pressure vessel containing a 2 inch (ID) by 2 3/4 inch draft tube (catalyst reservoir) which occupies approximately 70% of the reactor volume. The reactants, which are introduced and withdrawn from the reactor at a controlled rate, are circulated over the catalyst by means of a magnetically-driven impeller. Reactant feeds (alkyl amine and alkanol) are metered as liquids to a flasher and then as gases to the reactor by means of Moore flow controller valves and Brooks rotameters. Hydrogen gas is metered to the reactor through a Moore flow controller and a Hastings mass-flow meter.

In the following examples, the reactor is charged with 177g. (120 $cm^3$) of Harshaw Cu-1808T, 1/8 inch catalyst pellets (42 wt. % CuO, 38 wt. % $Cr_2O_3$ and 20 wt. % alumina carrier) and the liquid feed rate (amine-alkanol) to the reactor (via flasher) is 48 ml. per hour (space-time yield of 294g. amine-alkanol/liter of catalyst/hour). The hydrogen feed rate is 500 $cm^3$ per minute at standard temperature and pressure. The reactor impeller speed is 1250 rpm (superficial gas velocity of about 4 ft/second) and the reaction pressure is maintained at 235 psig (17.2 bars). The results of the reactions carried out for Examples 1-4 are set forth in the following table.

6

| Example No. | Feed Ratio Amine/Alkanol* | Alkanol Conversion % | Target Product Yield, % | Product* Mole % | Composition Weight % |
|---|---|---|---|---|---|
| 1[1] | 1.2/1 (moles) DMA/EtOH | 47.1 | 91.0 | (DMEA) 20.9 (DMA) 42.5 (EtOH) 24.1 (H$_2$O) 11.5 (DEMA) 1.0 $\overline{100}$ | 31.5 39.5 22.9 4.3 1.8 $\overline{100}$ |
| 2[2] | 1.2/1 (moles) DMA/EtOH | 68.2 | 86.0 | (DMEA) 24.9 (DMA) 36.9 (EtOH) 13.5 (H$_2$O) 22.7 (DEMA) 2.0 $\overline{100}$ | 38.9 35.4 13.3 8.7 3.7 $\overline{100}$ |
| 3[3] | 2/1 (moles) DMA/n-BuOH | 87.0 | 88.9 | (DMBA) 24.4 (DMA) 43.5 (BuOH) 3.0 (H$_2$O) 27.5 (DBMA) 1.6 $\overline{100}$ | 45.9 36.5 4.1 9.2 4.3 $\overline{100}$ |
| 4[4] | 1/3 (moles) MEA/n-BuOH | 52.9 | 81.6 | (EBA) 11.0 (MEA) 12.0 (BuOH) 63.0 (H$_2$O) 11.5 [DBEA] 0.3 & [DEBA] $\overline{100}$ | 16.7 8.1 69.2 3.1 0.6 $\overline{100}$ |

0233317

1 - Reaction Temperature 180.9-180.0 °C (Top-Bottom)

2 - " " 225-225.8 °C " "

3 - " " 197-196 °C " "

4 - " " 180-174.4 °C " "

\* DMEA = dimethylethyl amine     DMA = dimethyl amine

DEMA = diethylmethyl amine     EBA = ethylbutyl amine

DMBA = dimethylbutyl amine     MEA = monoethyl amine

DBMA = dibutylmethyl amine     BuOH = n-butanol

DBEA = dibutylethyl amine     EtOH = ethanol

DEBA = diethylbutyl amine     $H_2O$ = water

The results demonstrated by the data in the foregoing table are (i) a high yield of the target amine is produced (81.6-90%), (ii) no undesirable aldehyde products are generated and (iii) no malodorous trimethylamine (symetrical trialkyl-amines) is produced.

8

CLAIMS

1. A process of preparing mixed alkyl amines comprising reacting a primary or secondary $C_{1-5}$ alkanol with a primary or secondary mono- or di-$C_{1-5}$ alkyl amine, said amine having a different number of carbon atoms in the alkyl radical than said alkanol, at a molar ratio of amine to alkanol ranging from 0.2 to about 5, a temperature in the range of 170 to about 240 °C, a pressure of from 225 psig (16.5 bars) to about 550 psig (38.9 bars) in the presence of hydrogen and a hydrogenation/dehydrogenation catalyst comprising copper and chromium oxides alone or admixed with barium oxide, and for a time sufficient to form the corresponding mixed amine.

2. The process of claim 1 wherein said catalyst is mounted on a solid, inert support.

3. The process of claim 2 wherein the molar ratio is from about 0.5 to about 1.5.

4. The process of claim 2 wherein the temperature ranges from about 180 to about 225 °C.

5. The process of claim 2 wherein the pressure ranges from 230 to 300 psig.

6. The process of claim 2 wherein the alkanol reactant is ethanol or n-butanol.

7. The process of claim 2 wherein the alkyl amine reactant is dimethyl amine or monoethyl amine.

8.   The process of claim 2 wherein the reactants are continuously charged to the reactor and the product is continuously recovered.

9.   The process of claim 8 wherein the molar ratio is from about 0.5 to about 1.5, the temperature ranges from about 180 to about 225 °C, and the pressure ranges from 230 to 300 psig.

10.   The process of claim 9 wherein the alkanol is ethanol or n-butanol.

11.   The process of claim 10 wherein the alkyl amine is dimethyl amine or monoethyl amine.

12.   The process of claim 9 wherein said catalyst includes from about 5 to about 25 weight percent of barium oxide based on the weight of the active catalyst and said catalyst is mounted on a silica or alumina containing solid, inert support.

))) European Patent
Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol 9, no. 283 (C-313)[2006], 9th November 1985; & JP - A - 60 126 247 (SHIN NIPPON RIKA) 05-07-1985 | 1,5-7 | C 07 C 85/06 C 07 C 87/127 B 01 J 23/86 |
| A | US-A-4 251 465 (SWIFT) * column 2, lines 25-52, claim 1 * | 1 | |
| A | DE-A-2 709 864 (LONZA) * claim 1, page 7, paragraph 4 * | 1 | |
| A | EP-A-0 024 225 (PRODUITS CHIMIQUES UGINE KUHLMANN) * whole document * & US - A - 4 310 697 (Cat. D) | 1 | |
| A | US-A-3 223 734 (FALLSTAD) * column 3, lines 67-73; claims * | 1 | TECHNICAL FIELDS SEARCHED (Int. Cl.4)<br><br>C 07 C 85/00 C 07 C 87/00 B 01 J 23/00 |
| A | US-A-3 366 687 (ELLIS) * column 2, lines 53-64; claims * | 1 | |

The present search report has been drawn up for all claims

| Place of search | Date of completion of the search | Examiner |
|---|---|---|
| BERLIN | 28-04-1987 | PROBERT C.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82